(19) Europäisches Patentamt
European Patent Office
Office européen des brevets

(11) Publication number: **0 391 639 A2**

(12) **EUROPEAN PATENT APPLICATION**

(21) Application number: **90303502.0**

(51) Int. Cl.[5]: **C07F 9/165, A01N 57/10**

(22) Date of filing: **02.04.90**

(30) Priority: **03.04.89 JP 85059/89**
**03.04.89 JP 85060/89**

(43) Date of publication of application:
**10.10.90 Bulletin 90/41**

(84) Designated Contracting States:
**CH DE FR GB IT LI NL**

(71) Applicant: **SUMITOMO CHEMICAL COMPANY, LIMITED**
**5-33 Kitahama 4-chome Chuo-ku**
**Osaka-shi Osaka(JP)**

(72) Inventor: **Sasaki, Mitsuru**
**10-5-305, Sonehigashinocho 2-chome**
**Toyonaka-shi(JP)**
Inventor: **Ito, Yoshikazu**
**11-8-304, Sonehigashinocho 2-chome**
**Toyonaka-shi(JP)**
Inventor: **Hatakoshi, Makoto**
**10-2-253, Sonehigashinocho 2-chome**
**Toyonaka-shi(JP)**

(74) Representative: **Cresswell, Thomas Anthony et al**
**J.A. Kemp & Co. 14 South Square Gray's Inn**
**London WC1R 5LX(GB)**

(54) **Geometrical isomer of 0,0-diethyl 0-1-(N-methoxyimino)-ethylphosphorothioate, process for producing the same, and soil pest controlling composition comprising the same as active ingredient.**

(57) A geometrical isomer of formula:

$$(C_2H_5O)_2\overset{\overset{S}{\|}}{P} - O - \overset{\overset{CH_3}{|}}{C} = N - OCH_3$$

which gives a $^{13}$C-NMR signal in deuterochloroform caused by the carbon atom of the C = N bond in a lower magnetic field than does the other geometric isomer.

EP 0 391 639 A2

# GEOMETRICAL ISOMER OF O,O-DIETHYL O-1-(N-METHOXYIMINO)ETHYLPHOSPHOROTHIOATE, PROCESS FOR PRODUCING THE SAME, AND SOIL PEST CONTROLLING COMPOSITION COMPRISING THE SAME AS ACTIVE INGREDIENT

The present invention relates to a geometrical isomer of O,O-diethyl O-1-(N-methoxyimino)-ethylphoshorothioate having the formula (I),

$$(C_2H_5O)_2\overset{S}{\overset{\|}{P}} - O - \overset{CH_3}{\overset{|}{C}} = N - OCH_3 \qquad (I)$$

a process for producing the same and a soil pest controlling composition comprising the compound (I) as an active ingredient.

The compound of the formula (I) is disclosed in JP-A-63-310896. In the patent gazette, however, nothing is suggested about the existence of syn-anti geometrical isomers concerning the C=N bond. Further, the compound mentioned there does not exhibit a satisfactory activity when used as a practical soil pest controlling composition.

According to the present invention, there are provided a geometrical isomer concerning the C=N bond in the molecule (hereinafter compound (A)), which has the formula (I) and gives a $^{13}$C-NMR signal in deuterochloroform caused by the carbon atom of the C=N bond in lower magnetic field than does the other geometric isomer, a process for producing the compound (A), and a soil pest controlling composition comprising the compound (A). The present invention is based on the finding that the geometrical isomer of the present invention exhibits a lower acute toxicity and fish toxicity than the other geometrical isomer giving a $^{13}$C-NMR signal caused by the carbon atom of the C=N bond at a higher magnetic field (hereinafter, the latter geometric isomer is referred to as compound B).

JP-A-63-310896 discloses that the compound having the formula (I) can be obtained by allowing O,O-diethyl thiophosphoric acid chloride having the formula (II),

$$(C_2H_5O)_2\overset{S}{\overset{\|}{P}}Cl \qquad (II)$$

to react with N-methoxyacetamide having the formula (III),

$$CH_3\overset{O}{\overset{\|}{C}}NHOCH_3 \qquad (III)$$

in the presence of a base. The present inventors have found that the process of Production Example of JP-A-63-310896 gives a mixture of compound (A) and compound (B) in a molar ratio of about 9:1 and a large amount of highly toxic by-product having the formula (IV),

$$(C_2H_5O)_2\overset{S}{\overset{\|}{P}} - O - \overset{S}{\overset{\|}{P}}(OC_2H_5)_2 \qquad (IV).$$

Thus, the inventors have improved the production process and developed a process for selectively producing the compound (A).

According to the process of the present invention, the compound (A) is produced in a high yield and a high selectivity by allowing O,O-diethyl thiophosphoric acid chloride having the formula (II) to react with N-methoxyacetamide having the formula (III) in the presence of an acid-eliminating agent such as sodium hydrogen carbonate or the like, by the use of monovalent copper ion such as cuprous chloride or the like and a phase transfer catalyst, in a binary system consisting of an organic solvent and water, while maintaining the pH of the reaction mixture in the range of 7.5-8.5.

The amounts used of the compound of the formula (III) and of the acid-eliminating agent are not critical. Usually, they are 1 to 2 equivalents per equivalent of the compound (II). The amount used of water is not critical. Usually, it is 1-2 equivalent per equivalent of the acid-eliminating agent. The kind of the acid-eliminating agent is not critical. Specific examples of the acid-eliminating agent are sodium hydrogen carbonate, potassium hydrogen carbonate, sodium carbonate, potassium carbonate, sodium hydroxide and the like. The type of the source of cuprous ion as a catalsyt is not critical. Specific examples of the source of cuprous ion are cuprous chloride, cuprous oxide and the like. The type of the phase transfer catalyst is not critical. Specific examples of the phase transfer catalyst are quaternary ammonium salts such as tetrabutylammonium bromide, benzyltriethylammonium chloride and the like; and quaternary phosphonium salts such as tetrabutylphosphonium bromide, butyltriphenylphosphonium chloride and the like. Although

the amounts used of the cuprous ion and phase transfer catalyst are not critical, they are usually used in an amount of 0.01 to 0.3 equivalent each, per equivalent of the compound of the formula (II). The species of the organic solvent used in the reaction is not critical. Specific examples of the solvent are aromatic hydrocarbons such as toluene, benzene and the like. The reaction temperature and the reaction time are dependent on the catalyst and solvent used in the reaction, and they cannot be determined simply. Usually, the reaction temperature is 50° to 80° C and the reaction time is about 2 to about 5 hours. The reaction is carried out while maintaining the pH of the reaction system in the range of 7.5 to 8.5, and preferably around 8.0. Optionally, the pH of reaction system may be controlled by adding thereto an acid eliminating agent by drops. After completion of the reaction, usual work-up is carried out.

According to the production process of the present invention, the by-product, pyrophosphoric acid esters having the formula (IV), are hardly formed, and due to this, the intended product can be produced in a high yield and the conventional, troublesome procedure for isolation can be neglected.

The compound (A) exhibits a high activity against various soil pests including:

the pests belonging to Genus Diabrotica such as Diabrotica virgifera virgifera (Western corn rootworm), Diabrotica longicornis barberi (Northern corn rootworm), Diabrotica undecimpunctata howardi (Southern corn rootworm) and the like;

the pests belonging to Genus Anomala such as Anomala cuprea Hope, Anomala rufocuprea Motschulsky, Anomala daimiana Harold, Anomala testaceips Motschulsky and the like;

the pests belonging to Genus Popillia such as Popillia japonica Newman and the like;

the pests belonging to Genus Aulacophora such as Aulacophora femoralis (Motschulsky) and the like;

the pests belonging to Genus Phyllotreta such as Phyllotreta striolata (Fabricius) and the like;

the pests belonging to Genus Melanotus such as Melanotus fortnumi Candèze and the like;

the pests belonging to Genus Agriotes such as Agriotes ogurae fuscicollis Miwa and the like;

the pests belonging to Genus Hylemya such as Hylemya antiqua, Hylemya floralis Fallén, Hylemya platura and the like;

the pests belonging to Genus Agrotis such as Agrotis segetum (Deniset Schiffermüller), Agrotis ipsilon (Hufnagel) and the like;

the pests belonging to Genus Gryllotalpa such as Gryllotalpa africana Palisot de Beaurois and the like;

the pests belonging to Genus Lissorhoptrus such as Lissorhoptrus oryzophilus Kuschel and the like;

the pests belonging to Genus Pratylenchus such as Pratylenchus penetrans (Cobb), Pratylenchus vulnus Allen et Jensen, Pratylenchus coffeae (Zimmermann) and the like;

the pests belonging to Genus Heterodera such as Heterodera glycines Ichinohe and the like;

the pests belonging to Genus Meloidogyne such as Meloidogyne hapla Chitwood, Meloidogyne incognita (Kofoid et White), Moloidogyne javanica (Treub), Meloidogyne arenaria (Neal) and the like;

the pests belonging to Genus Aphelenchoides such as Aphelenchoides besseyi Christie; etc.

When the compound (A) of the present invention is used as an active ingredient for a soil pest controlling composition, it is usually mixed with a solid carrier, liquid carrier or gaseous carrier and optionally with adjuvants such as surfactant and the like to be formed into oily formulation, emulsifiable concentrate, wettable powder, granule, dust, aerosol or the like.

In these compositions, the compound of the present invention is contained preferably in an amount of 0.1-99.9% by weight and more preferably 1-80% by weight.

The solid carrier may be a conventionally used one. Specific examples thereof are fine powders and granules of clays (e.g. kaolinite, diatomaceous earth, synthetic silicon oxide hydrate, fubasami clay, bentonite and acid clay), talcs, other inorganic minerals (e.g. sericite, quartz powder, sulfur powder, active charcoal, calcium carbonate and hydrated silica), chemical fertilizers (e.g. ammonium suflate, ammonium phosphate, ammonium nitrate, urea and ammonium chloride) and the like. The liquid carrier may be a conventionally used one. Specific examples thereof are water, alcohols (e.g. methanol and ethanol), ketones (e.g. acetone and methyl ethyl ketone), aromatic hydrocarbons (e.g. benzene, toluene, xylene, ethylbenzene and methylnaphthalene), aliphatic hydrocarbons (e.g. n-hexane, cyclohexane, kerosene and lightening oil), esters (e.g. ethyl acetate and butyl acetate), nitriles (e.g. acetonitrile and isobutyronitrile), ethers (e.g. dioxane and diisopropyl ether), acid amides (e.g. dimethylformamide and dimethylacetamide), halogenated hydrocarbons (e.g. dichloroethane, trichlorethylene and carbon tetrachloride) and the like. The gaseous carrier may be a conventionally used one. Specific examples thereof are chlorofluorocarbon (CFC) gas, butane gas, carbon dioxide gas, and the like.

The surfactant may be a conventionally used one. Specific examples thereof are alkyl sulfuric acid esters, alkyl sulfuric acid salts, alkylsulfonic acid salts, alkylarylsulfonic acid salts, alkyl aryl ethers and their polyoxyethylene addition products, polyethylene glycol ethers, polyhydric alcohol esters, sugar-alcohol derivatives, and the like.

The adhering and dispersing agents may be optionally used. They may be conventionally conventionally-used ones. Specific examples thereof are casein, gelatin, polysaccharides (e.g. powdery starch, gum arabic, cellulose derivatives and alginic acid), lignin derivatives, bentonite, sugars, synthetic water-soluble polymers (e.g. polyvinyl alcohol, polyvinyl pyrrolidone and polyacrylic acids) and the like. Stabilizers also may be used as occasion demands. They may be conventionally-used ones. Specific examples of the stabilizer are PAP (isopropyl acid phosphate), BHT (2,6-di-tert-butyl-4-methylphenol), BHA (mixture of 2-tert-butyl-4-methoxyphenol and 3-tert-butyl-4-methoxyphenol), vegetable oils, mineral oils, surfactants, fatty acids, fatty acid esters, and the like.

The above-mentioned formulation can be sprayed onto soil surface either as such or diluted with water etc. If necessary, they may be mixed with soil or drenched into soil after spraying. Otherwise, they may be sprayed onto foliages. It is also possible to use them together with other agents such as insecticide, mitecide, nematocide, fungicide, seed disinfectant, fertilizer or soil conditioner.

Next, the present invention will be illustrated in more detail with reference to the following Production Examples, Formulation Examples and Test Examples. However, the present invention should not be interpreted to be limited to these examples.

First of all, Production Examples of the compound (A) will be described.

Production Example 1

To 16.8 g of sodium hydrogen carbonate was added 25 g of water. Then, 2.0 g of tetrabutylammonium bromide, 2.0 g of cuprous chloride, 9.8 g of N-methoxyacetamide and 35 g of toluene were added thereto. While stirring the resulting mixture at room temperature, 18.9 g of O,O-diethylthiophosphoric acid chloride was added. The resulting mixture was heated to 80°C and kept at this temperature for 3 hours. Then, the mixture was cooled and filtered with Celite, and toluene layer was separated from the filtrate. The toluene layer was washed with saturated aqueous solution of sodium chloride and dried over anhydrous magnesium sulfate. Removing the solvent from the dried layer gave 22.5 g (yield: 93%) of the compound (A).

Gas chromatographic analysis (packing material in column: 10% Salmon 3000; column length: 1.5 m; inlet temperature 250°C; column temperature: elevated from 100°C to 200°C at a speed of 7.5°C/min.) revealed that the product contained 97.1% of the compound (A) and 0.7% of the compound of the formula (IV).

High performance liquid chromatographic analysis (packing material in column: SUMIPAX R-613, Lichrosorb RP-8; column size: 4 mmØ x 25 cm; Developing solution: methanol/water = 3/2 (V/V)) revealed that the molar ratio of (A) to (B) produced was 99:1.

The compound (A) was then purified by silica gel chromatography. Characteristics of the purified product were as follows:

$n_D^{21.7}$ 1.4665

$$\text{UV;}\quad \lambda_{max}^{Ethanol}\ 205\ \text{nm}\ (\varepsilon = 4{,}600)$$

IR($cm^{-1}$); 2,992 (m), 2,944 (m), 2,914 (m), 1,659 (m, C=N), 1,446 (m), 1,377 (m), 1,260 (s), 1,188 (m), 1,164 (m), 1,068 (s), 1,023 (s), 972 (s), 888 (m), 825 (s), 780 (s)

$^1$H-NMR(60 MHz);

$$\delta_{CDC\ell_3}^{TMS}\ (ppm)$$

1.30 (6H, t, J=6Hz), 2.00 (3H, s), 3.72 (3H, s), 3.90 - 4.45 (4H, m) $^{13}$C-NMR(22.5 MHz);

$$\delta_{CDC\ell_3}^{TMS}\ (ppm)$$

14.24 (d, $J_{cp}$=4.2Hz), 15.81 (d, $J_{cp}$=7.6Hz), 62.08, 65.07 (d, $J_{cp}$=5.5Hz), 155.71 (d, $J_{cp}$=8.3Hz)

$^{31}$P-NMR(109 MHz);

$$\delta^{H_3PO_4}_{(CD_3)_2CO} \quad (ppm)$$

-60.40
Elementary analysis:
Calculated ($C_7H_{16}NO_4PS = 241.27$)
C; 34.84, H; 6.70, N; 5.81,
P; 12.84, S; 13.29(%)
Found
C; 34.70, H; 6.65, N; 5.92,
P; 12.50, S; 13.40(%)

Production Example 2

The same procedure as in Production Example 1 were repeated except that the sodium hydrogen carbonate was replaced by potassium hydrogen carbonate (the reaction time was 4 hours). As a result, the compound (A) was obtained in a yield of 91%.

Gas chromatographic analysis revealed that the produce contained 98.2% of the compound (A) and 0.5% of the compound of formula (IV).

High performance liquid chromatography revealed that the molar ratio of (A) to (B) produced was 99:1.

Production Example 3

The same procedure as in Production Example 1 was repeated except that the sodium hydrogen carbonate was replaced by sodium carbonate (the reaction temperature was 50°-60° C and the reaction time was 4 hours). As a result, the compound (A) was obtained in a yield of 88.6%.

Gas chromatographic analysis revealed that the product contained 98.2% of the compound (A) and 0.6% of the compound of formula (IV).

Next, production of the compound (B) used in the test example presented later will be described as referential examples.

The compound (B) can be selectively obtained (compound (A) : compound (B) = about 1 : 99) without the formation of the compound of formula (IV) as by-product according to the method disclosed in JP-A-63-310896 by using sodium hydroxide as a base and tetrahydrofuran as a solvent or by using calcium oxide as a base and methyl isobutyl ketone as a solvent.

Referential Example 1

To a solution of 11.6 g of N-methxoyacetamide in 50 ml methyl isobutyl ketone was added 7.3 g of calcium oxide. While maintaining the reaction system at 60°-70° C, 18.9 g of O,O-diethylthiophosphoric acid chloride was added, and then the mixture was kept at 80° C for 7 hours. Then, the mixture was allowed to cool and filtered with Celite. The filtrate was concentrated under reduced pressure, the concentrate was mixed with toluene and water, and the toluene layer was separated from the resulting concentrate. The toluene layer was washed with saturated aqueous solution of sodium chloride and dried over anhydrous magnesium sulfate, after which the solvent was distilled off to obtain 22.80 g (yield: 94.5%) of the compound (B).

Gas chromatographic analysis (packing material of column: 10% Salmon 3000; column length: 1.5 m; inlet temperature 250° C; column temperature: elevated from 100° C to 200° C at a rate of 7.5° C/min.) revealed that the product contained 99.6% of the compound (B) and 0.2% of the compound of the formula (IV).

High performance liquid chromatography (packing material of column: SUMIPAX R-613, Lichrosorb RP-8; column size: 4 mmØ x 25 cm; developing solution: methanol/ water = 3/2 (V/V)) revealed that the molar

ratio of (A) to (B) produced was 1:99.

The compound (B) was purified by silica gel chromatography. Characteristics of the purified product were as follows: $n_D^{21.0}$ 1.4640

$$UV;\ \lambda_{max}^{Ethanol}\ 205\ nm\ (\varepsilon = 4,700)$$

IR($cm^{-1}$); 2,986 (m), 2,938 (m), 2,860 (m), 1,659 (m, C=N), 1,467 (m), 1,443 (m), 1,386 (s), 1,254 (s), 1,188 (m), 1,164 (m), 1,023 (s), 975 (s), 972 (s), 903 (s), 825 (s), 753 (s)

$^1$H-NMR(60 MHz);

$$\delta_{CDC\ell_3}^{TMS}\ (ppm)$$

1.35 (6H, t, J=6Hz), 2.05 (3H, d, J=2Hz), 3.75 (3H, s), 3.90 - 4.45 (4H, m)

$^{13}$C-NMR 22.5 MHz);

$$\delta_{CDC\ell_3}^{TMS}\ (ppm)$$

15.81 (d, $J_{cp}$=7.6Hz), 17.71, 61.83, 65.00 (d, $J_{cp}$=5.5Hz), 145.01 (d, $J_{cp}$=9.0Hz)

$^{31}$P-NMR(109 MHz);

$$\delta_{(CD_3)_2CO}^{H_3PO_4}\ (ppm)$$

-58.60

Elementary analysis

Calculated ($C_7H_{16}NO_4PS$=241.27)

C; 34.84, H; 6.70, N; 5.81,

P; 12.84, S; 13.29 (%)

Found

C; 34.65, H; 6.91, N; 5.70,

P; 12.60, S; 13.05(%)

Referential Example 2

To 8.4 g of sodium hdyrogen carbonate was added 13 g of water. Then, 6.00 g of N-methoxypropionic acid amide and 30 g of toluene were added thereto. While stirring the mixture, 9.4 g of O,O-diethylthiophosphoric acid chloride was added thereto at room temperature, after which the resulting mixture was heated and kept at 70°-80°C for 5 hours. The pH of the reaction mixture was about 8.0. After cooling the reaction mixture, it was filtered with Celite. A toluene layer was separated from the filtrate, washed with saturated aqueous solution of sodium chloride and dried over anhydrous magnesium sulfate. Then, the solvent was distilled off from the dried layer to obtain 6.8 g of a crude product. Gas chromatographic analysis revealed that the product contained 24.2% of the compound (B), 35.5% of the compound of the formula (IV) as a by-product and unidentified substances as the balance.

High performance liquid chromatography revealed that the molar ratio of (A) to (B) produced was 1:99.

Next, Formulation Example of the present invention will be presented below, wherein parts are by weight.

Formulation Example 1: Emulsifiable Concentrate

Fourty parts of the compound (A) was dissolved in 50 parts of xylene. After adding thereto 10 parts of Solpol®SM-200 (trade name of TOHO CHEMICAL INDUSTRY CO., LTD., a mixture of polyoxyethylene alkylaryl ether etc. and dodecylbenzenesulfonic acid), the resulting mixture was thoroughly homogenized with stirring to prepare an emulsifable concentrate having an active ingredient concentration of 40%.

Formulation Example 2: Wettable Powder

Fourty parts of the compound (A) was thoroughly mixed with 5 parts of Solpol®SM-200 (mentioned above), to which were added 20 parts of Carplex®#80 (trade name of Shionogi & Co., Ltd., fine powder of synthetic silicon oxide hydrate) and 35 parts of 800 mesh diatomaceous earth. The resulting mixture was stirred and homogenized with a juice mixer to prepare a wettable powder having an active ingredient concentration of 40%.

Formulation Example 3: Granule

To 5 parts of the compound (A) were added 5 parts of Toyolignin®CT (trade name of Toyobo Co., Ltd., ligninsulfonic acid salt) and 90 parts of Zeklit® GSM (trade name of Zeklit Mining Inc., powdery quartz), and the mixture was thoroughly stirred and homogenized in a kneader. Then, a quantity corresponding to 10% of the mixture of water was added thereto, and the resulting mixture was additionally stirred, granualted with a granulator and dried by ventilation to prepare a granule having an active ingredient concentration of 5%.

Formulation Example 4: Dust

Five parts of the compound (A) was dissolved into 20 parts of acetone. After adding thereto 3 parts of Carplex®#80 (mentioned above), 0.3 part of PAP and 91.7 parts of 300 mesh talc, the resulting mixture was stirred and homogenzied in a juice mixer and the acetone was evaporated off to prepare a dust having an active ingredient concentration of 5%.

Formulation Example 5: Flowable concentrate

Ten parts of the compound (A) was added to 40 parts of an aqueous solution containing 6 parts of polyvinyl alcohol and the resulting mixture was stirred with a mixer to prepare a dispersion. Then, 40 parts of an aqueous solution containing 0.05 part of xanthane gum and 0.1 part of aluminum magnesium silicate was added and further 10 parts of propylene glycol was added, and the resulting mixture was gently stirred and homogenized to prepare a flowable concentrate having an active ingredient concentration of 10%.

Formulation Example 6: Oily formulation

Twenty parts of the compound (A) was dissolved into 80 parts of kerosene to prepare an oily formulation having an active ingedient concentration of 20%.

When the compound (A) of the present invention is used as an active ingredient of soil pest controlling compositions, the dose is usually 10 g to 1,000 g, preferably 50 g to 500 g, per 10 ares. The concentration at the time of application is 0.01% to 30%, if the compound (A) is applied in the form of an aqueous dilution of emulsiable concentrate or wettable powder.

The above-mentioned dose and concentration may be varied depending on the kind of formulation, time of application, place of application, method of application, kind of soil pest, extent of injury, and other conditions, and they may be increased or decreased regardless of the ranges mentioned above.

Next, the controlling activity of the compound (A) against soil pests will be demonstrated with reference to the following test example. The test was carried out as a triple repetition test. Of the compounds subjected to the test, those used as a control are indicated by the compound symbols shown in Table 1.

Table 1

| Compound symbol | Chemical structural formula | Remarks |
|---|---|---|
| [C] | 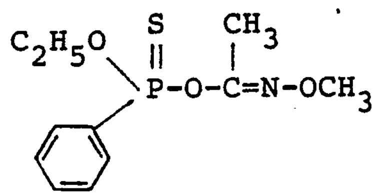 | Disclosed in JP-A-58-39692. |
| [D] | 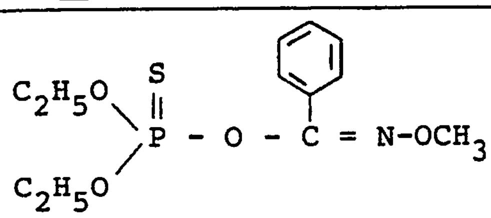 | Disclosed in JP-A-47-9149. |

Test Example

Five milliliters of an aqueous dilution of an emulsifiable concentrate containing a test compound, prepared according to the procedure of Formulation Example 1 was mixed with 50 g of a 16 mesh soil. The concentration of the active ingredient in the soil was controlled to 0.5, 0.25 or 0.125 ppm.

Each of the soils was packed into a polyethylene cup having a diameter of 5.6 cm and a height of 5.8 cm, into which were planted two seeds of maize of which root had grown up to a length of 2-3 cm. Then, 10 third-instar larvae of southern corn rootworm (Diabrotica undecimpunctata howardi) were allowed to live in the cup. Two days later, the numbers of dead and alive were counted for mortality (%). The results are summarized in Table 2.

Table 2

| Test compound | Mortality (%) | | |
|---|---|---|---|
| | 0.5 ppm | 0.25 ppm | 0.125 ppm |
| Compound (A) | 100 | 100 | 100 |
| Compound (B) | 100 | 100 | 100 |
| Compound (C) | 87 | 0 | - |
| Compound (D) | 0 | - | - |

Next, on the compounds (A) and (B), acute toxicity to mice and fish toxicity to carp were examined. The results are shown in Table 3.

Table 3

| Compound | Acute toxicity to mice | Fish toxicity to carp |
|---|---|---|
| | Dermal $LD_{50}$ (mg/kg) | $TLM_{48}$ (ppm) |
| [A] | > 500 | > 1.0 |
| [B] | 300 | < 0.1 |
| In this table, $LD_{50}$ signifies 50% lethal dose, and $TLM_{48}$ signifies 50% lethal concentration after 48 hours. | | |

The compound (A) exhibits a high activity against soil pests but shows a low toxicity, so that it is useful as an agent for controlling soil pests. Further, according to the production process of the present invention, the organic phosphorus compound having the formula (I) can be advantageously produced.

## Claims

1. A geometrical isomer of formula:

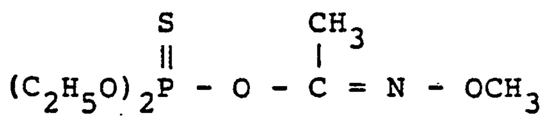

which gives a $^{13}$C-NMR signal in deuterochloroform caused by the carbon atom of the C=N bond in a lower magnetic field than does the other geometric isomer.

2. A process for selectively producing a geometrical isomer as defined in claim 1 which comprises reacting a phosphoric acid chloride of formula:

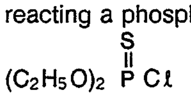

with a hydroxamate of formula:

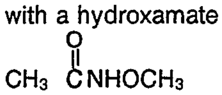

in the presence of an acid-eliminating agent, water, cuprous ions and a phase transfer catalyst, at a pH of from 7.5 to 8.5.

3. A process according to claim 2 in which the acid-eliminating agent is sodium hydrogen carbonate, potassium hydrogen carbonate, sodium carbonate, potassium carbonate or sodium hydroxide.

4. A process according to claim 2 or 3 in which the cuprous ions are provided by cuprous chloride or cuprous oxide.

5. A process according to any one of claims 2 to 4 which is carried out in the presence of an organic solvent.

6. A process according to any one of claims 2 to 5 in which the phase transfer catalyst is a quaternary ammonium salt or quaternary phosphonium salt.

7. A soil pest controlling agent which comprises as an active ingredient a geometrical isomer as defined in claim 1, and a carrier.

8. A method for controlling a soil pest at a locus which comprises applying thereto a geometrical isomer as defined in claim 1.

9. Use of a geometrical isomer as defined in claim 1 as a pesticide for a soil pest.